# EUROPÄISCHE PATENTSCHRIFT

(11) **EP 2 822 907 B1**
(45) Veröffentlichungstag und Bekanntmachung des Hinweises auf die Patenterteilung: **24.02.2021**
(21) Anmeldenummer: 13700564.1
(22) Anmeldetag: 16.01.2013
(51) Int. Cl.: C03C 17/34

(54) **KRAFTFAHRZEUGSCHEIBE MIT WÄRMESTRAHLUNG REFLEKTIERENDER BESCHICHTUNG**
WINDOW PANE FOR AUTOMOBILE WITH THERMAL RADIATION REFLECTING COATING
VITRE D'AUTOMOBILE DOTÉ D'UN REVÊTEMENT RÉFLÉCHISSANT DU RAYONNEMENT THERMIQUE

(30) Priorität: 05.03.2012 EP 12158005
(43) Veröffentlichungstag der Anmeldung: 14.01.2015
(73) Patentinhaber: SAINT-GOBAIN GLASS FRANCE, 92400 Courbevoie (FR)
(72) Erfinder: HAGEN, Jan, 53123 Bonn (DE); MELCHER, Martin, 52134 Herzogenrath (DE); RUCHMANN, Juliette, F-78100 Saint Germain en Laye (FR); VINCENT, Julia, LS9 8AU LEEDS (GB)
(74) Vertreter: Lendvai, Tomas
(86) Internationale Anmeldenummer: PCT/EP2013/050698
(87) Internationale Veröffentlichungsnummer: WO 2013/131667

(56) Entgegenhaltungen:
- WO-A1-2011/105991
- WO-A1-2012/131243
- WO-A2-2012/022876
- US-A- 4 507 547

## Beschreibung

Die Erfindung betrifft eine Kraftfahrzeug-Scheibe mit Wärmestrahlung reflektierender Beschichtung, ein Verfahren zu deren Herstellung und deren Verwendung.

Der Innenraum eines Kraftfahrzeugs kann sich im Sommer bei hohen Umgebungstemperaturen und intensiver direkter Sonneneinstrahlung stark erwärmen. Ist die Außentemperatur geringer als die Temperatur im Fahrzeuginnenraum, was insbesondere im Winter auftritt, so wirkt eine kalte Scheibe als Wärmesenke, die von den Insassen als unangenehm empfunden wird. Auch muss eine hohe Heizleistung der Klimaanlage bereitgestellt werden, um eine Auskühlung des Innenraums über die Fahrzeugscheiben zu vermeiden.

Wärmestrahlung reflektierende Beschichtungen (sogenannte Low-E-Beschichtungen) sind bekannt. Eine solche Beschichtung reflektiert einen erheblichen Teil der Sonnenstrahlung insbesondere im Infrarotbereich, was im Sommer zu einer verringerten Erwärmung des Fahrzeuginnenraums führt. Die Beschichtung verringert außerdem die Aussendung von langwelliger Wärmestrahlung einer erwärmten Scheibe in den Fahrzeuginnenraum hinein, wenn die Beschichtung auf der dem Fahrzeuginnenraum zugewandten Oberfläche einer Scheibe aufgebracht ist. Eine solche Beschichtung verringert außerdem bei niedrigen Außentemperaturen im Winter die Abstrahlung der Wärme des Innenraums in die äußere Umgebung.

Eine Wärmestrahlung reflektierende Beschichtung kann beispielsweise funktionelle Schichten aus Niob, Tantal oder Zirkonium enthalten. Solche Beschichtungen sind beispielsweise aus US 20110146172 A1, EP 1 218 307 B1 und EP 2 247 549 A2 bekannt. Solche Beschichtungen führen dazu, dass die Transmission der Scheibe im sichtbaren Spektralbereich deutlich herabgesetzt wird. Die Beschichtungen können daher nicht auf Scheiben verwendet werden, für die gesetzliche Vorgaben hinsichtlich der Transmission eingehalten werden müssen, beispielsweise Windschutzscheiben oder vordere Seitenscheiben. Es sind auch Wärmestrahlung reflektierende Beschichtungen mit funktionellen Schichten aus Silber bekannt, beispielsweise aus EP 877 006 B1, EP 1 047 644 B1 und EP 1 917 222 B1. Solche Beschichtungen sind jedoch korrosionsanfällig und nicht hinreichend mechanisch beständig. Die Beschichtungen können daher nicht auf der zum Fahrzeuginnenraum hingewandten Oberfläche einer Scheibe aufgebracht werden, wo die Beschichtung der Luft und anderen Umwelteinflüssen ausgesetzt ist.

WO2012/022876A2 offenbart eine Scheibe mit einer Wärmestrahlung reflektierenden Beschichtung auf ihrer außenseitigen Oberfläche. Die Beschichtung dient dazu, Kondensation auf der außenseitigen Oberfläche zu verhindern. Die oberste Schicht der Beschichtung ist eine photokatalytische Schicht, wodurch die Scheibe selbstreinigende Eigenschaften aufweist.

WO2011/105991A1 offenbart eine Scheibe mit einer Wärmestrahlung reflektierenden Beschichtung, welche auf der ihrer innenraumseitigen Oberfläche aufgebracht sein kann. Die Beschichtung weist eine funktionelle Schicht aus Indiumzinnoxid auf neben dielektrischen Schichten auf.

US4507547A offenbart eine weitere Scheibe mit einer Wärmestrahlung reflektierenden Beschichtung mit einer funktionellen Schicht aus Indiumzinnoxid.

WO2012131243A1 offenbart eine Isolierglaseinheit, welche mit zwei Wärmestrahlung reflektierenden Beschichtungen ausgestattet ist, wobei eine der Beschichtungen eine metallische funktionelle Schicht aufweist und die andere eine funktionelle Schicht auf Basis eines transparenten leitfähigen Oxids wie Indiumzinnoxid.

Häufig sollen Scheiben nach dem Aufbringen der Beschichtung einer Wärmebehandlung und einer mechanischen Transformation unterzogen werden. Scheiben für den Kraftfahrzeugbereich, beispielsweise Windschutzscheiben, Seitenscheiben und Heckscheiben werden dabei typischerweise gebogen und häufig mit einer Vorspannung oder Teilvorspannung versehen.

Die Aufgabe der vorliegenden Erfindung besteht darin, eine verbesserte Kraftfahrzeug-Scheibe mit Wärmestrahlung reflektierender Beschichtung sowie ein Verfahren zu ihrer Herstellung bereitzustellen. Die Beschichtung soll transparent und korrosionsbeständig sein und beim Biegen und Vorspannen der Scheibe nicht beschädigt werden.

Die Aufgabe der vorliegenden Erfindung wird erfindungsgemäß durch eine Kraftfahrzeug-Scheibe mit Wärmestrahlung reflektierender Beschichtung gemäß Anspruch 1 gelöst. Bevorzugte Ausführungen gehen aus den Unteransprüchen hervor.

Die erfindungsgemäße Kraftfahrzeug-Scheibe umfasst mindestens ein gebogenes Substrat und mindestens eine Wärmestrahlung reflektierende Beschichtung auf der innenraumseitigen Oberfläche des Substrats, wobei die Beschichtung auf dem Substrat mindestens
- eine Haftschicht,
- oberhalb der Haftschicht eine funktionelle Schicht, die zumindest ein transparentes, elektrisch leitfähiges Oxid (TCO) enthält,
- oberhalb der funktionellen Schicht eine dielektrische Barriereschicht zur Regulierung von Sauerstoffdiffusion und
- oberhalb der Barriereschicht eine Antireflexionsschicht umfasst
und wobei die Barriereschicht eine Dicke von 10 nm bis 40 nm aufweist.

Ist eine erste Schicht oberhalb einer zweiten Schicht angeordnet, so bedeutet dies im Sinne der Erfindung, dass die erste Schicht weiter vom Substrat entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht.

Ist eine erste Schicht oberhalb oder unterhalb einer zweiten Schicht angeordnet, so bedeutet dies im Sinne der Erfindung nicht notwendigerweise, dass sich die erste und die zweite Schicht in direktem Kontakt miteinander befinden. Es können eine oder mehrere weitere Schichten zwischen der ersten und der zweiten Schicht angeordnet sein, sofern dies nicht explizit ausgeschlossen wird.

Enthält eine Schicht oder ein sonstiges Element zumindest ein Material, so schließt das im Sinne der Erfindung den Fall ein, dass die Schicht aus dem Material besteht.

Die erfindungsgemäße Wärmestrahlung reflektierende Beschichtung weist im sichtbaren Spektralbereich eine geringe Absorption und eine geringe Reflexion und daher eine hohe Transmission auf. Die Beschichtung kann daher auch auf Scheiben verwendet werden, bei denen eine deutliche Verringerung der Transmission nicht gewünscht oder gesetzlich verboten ist, beispielsweise bei Windschutzscheiben oder vorderen Seitenscheiben in Kraftfahrzeugen. Das ist ein großer Vorteil der Erfindung. Die erfindungsgemäße Beschichtung ist zudem korrosionsbeständig. Die Beschichtung kann daher auf der Oberfläche des Substrats aufgebracht sein, die dafür vorgesehen ist, in Einbaulage der Scheibe einem Innenraum eines Fahrzeugs zugewandt zu sein. Auf dieser Oberfläche verringert die erfindungsgemäße Beschichtung besonders effektiv im Sommer die Aussendung von Wärmestrahlung der Scheibe in den Innenraum und im Winter die Abstrahlung von Wärme in die äußere Umgebung.

Es hat sich gezeigt, dass der Sauerstoffgehalt der funktionellen Schicht die Eigenschaften der Wärmestrahlung reflektierenden Beschichtung hinsichtlich der Emissivität, der Transmission im sichtbaren Spektralbereich und der Biegbarkeit entscheidend beeinflusst. Ein zu geringer Sauerstoffgehalt führt zu einer hohen Absorption von sichtbarem Licht und damit zu einer geringen Transmission. Ein zu geringer Sauerstoffgehalt führt weiter zu einem zu hohen Flächenwiderstand und damit einer zu hohen Emissivität. Ein zu geringer Sauerstoffgehalt führt zudem zu einem deutlichen, oft unerwünschten Farbeindruck. Ein zu hoher Sauerstoffgehalt der funktionellen Schicht führt dazu, dass die funktionelle Schicht beim Biegen beschädigt wird. Eine solche Beschädigung zeigt sich insbesondere als Risse innerhalb der funktionellen Schicht. Ein zu hoher Sauerstoffgehalt führt weiter, ebenso wie ein zu geringer Sauerstoffgehalt, zu einem zu hohen Flächenwiderstand und damit einer zu hohen Emissivität.

Die innenraumseitige Emissivität der erfindungsgemäßen Scheibe beträgt bevorzugt kleiner oder gleich 25%, besonders bevorzugt kleiner oder gleich 20%. Mit innenraumseitiger Emissivität wird dabei das Maß bezeichnet, welches angibt, wie viel Wärmestrahlung die Scheibe in Einbaulage im Vergleich zu einem idealen Wärmestrahler (einem schwarzen Körper) in einen Innenraum eines Fahrzeugs abgibt. Unter Emissivität wird im Sinne der Erfindung der normale Emissionsgrad bei 283 K nach der Norm EN 12898 verstanden. Der Flächenwiderstand der erfindungsgemäßen Beschichtung beträgt bevorzugt von 10 Ohm/Quadrat bis 30 Ohm/Quadrat. Die Absorption der erfindungsgemäßen Beschichtung im sichtbaren Spektralbereich beträgt bevorzugt von etwa 1% bis etwa 15 %, besonders bevorzugt von etwa 1 % bis etwa 7%. Die Absorption der Beschichtung kann dabei bestimmt werden, indem die Absorption einer beschichteten Scheibe gemessen wird und die Absorption der unbeschichteten Scheibe subtrahiert wird. Die erfindungsgemäße Scheibe weist bei Reflexion bevorzugt einen Farbwert a* von -15 bis +5 und einen Farbwert b* von -15 bis +5 auf, betrachtet von der mit der erfindungsgemäßen Beschichtung versehenen Seite aus. Die Angaben a* und b* beziehen sich auf die Farbkoordinaten gemäß dem kolorimetrischen Modell (L*a*b*-Farbraum).

Um die angegebenen bevorzugten Werte für die Emissivität, den Flächenwiderstand, die Absorption und die Farbwerte in Reflexion zu erreichen, kann das Substrat nach dem Aufbringen der Wärmestrahlung reflektierenden Beschichtung einer Temperaturbehandlung unterzogen werden. Das Substrat wird dabei bevorzugt auf eine Temperatur von mindestens 200°C, besonders bevorzugt mindestens 300°C erhitzt. Eine solche Temperaturbehandlung beeinflusst insbesondere die Kristallinität der funktionellen Schicht und führt zu einer verbesserten Transmission der erfindungsgemäßen Beschichtung. Die Temperaturbehandlung verringert außerdem den Flächenwiderstand der Beschichtung, was zu einer verringerten Emissivität führt.

Die funktionelle Schicht weist nach dem Aufbringen und vor einer Temperaturbehandlung bevorzugt einen Sauerstoffgehalt auf, so dass der Flächenwiderstand der erfindungsgemäßen Beschichtung von 50 Ohm/Quadrat bis 250 Ohm/Quadrat, besonders bevorzugt von 80 Ohm/Quadrat bis 150 Ohm/Quadrat beträgt. Der spezifische Widerstand der funktionellen Schicht beträgt nach dem Aufbringen der Beschichtung und vor der Temperaturbehandlung bevorzugt von 500*10"⁶ Ohm*cm bis 3500*10⁻⁶ Ohm*cm, besonders bevorzugt von 1000*10⁻⁶ Ohm*cm bis 2000*10⁻⁶ Ohm*cm. Die Absorption der Beschichtung im sichtbaren Spektralbereich beträgt nach dem Aufbringen und vor der Temperaturbehandlung bevorzugt von 8 % bis 25 %, besonders bevorzugt von 13 % bis 20 %. Der Sauerstoffgehalt kann beispielsweise bei einem Aufbringen der funktionellen Schicht durch Kathodenzerstäubung durch die Wahl des Targets und / oder durch den Sauerstoffgehalt der Atmosphäre beeinflusst werden. Der Sauerstoffgehalt, der für einen Flächenwiderstand und für eine Absorption in den angegebenen Bereichen geeignet ist, kann durch den Fachmann beispielsweise durch Simulationen oder Versuche ermittelt werden.

Es hat sich gezeigt, dass die Temperaturbehandlung aufgrund der Diffusion von Sauerstoff zu einer Oxidation der funktionellen Schicht führt. Durch die erfindungsgemäße Barriereschicht kann das Ausmaß der Oxidation der funktionellen Schicht beeinflusst werden. Der erfindungsgemäße Bereich für die Dicke der Barriereschicht von 10 nm bis 40 nm ist besonders vorteilhaft im Hinblick auf die Transmission von sichtbarem Licht, den Flächenwiderstand und insbesondere die Biegbarkeit der Beschichtung. Eine dünnere Barriereschicht führt zu einem zu hohen Sauerstoffgehalt der funktionellen Schicht nach der Temperaturbehandlung. Eine dickere Barriereschicht führt zu einem zu geringen Sauerstoffgehalt der funktionellen Schicht nach der Temperaturbehandlung. Der Einfluss der Barriereschicht auf den Sauerstoffgehalt der funktionellen Schicht ist ein weiterer großer Vorteil der Erfindung.

Die Dicke der Barriereschicht beträgt bevorzugt von 10 nm bis 30 nm, besonders bevorzugt 12 nm bis 30 nm, ganz besonders bevorzugt von 15 nm bis 25 nm und insbesondere von 18 nm bis 22 nm. Damit werden besonders gute Ergebnisse im Hinblick auf die Transmission von sichtbarem Licht, den Flächenwiderstand und die Biegbarkeit erreicht. Die Dicke der Barriereschicht kann aber auch beispielsweise von 10 nm bis 18 nm oder von 12 nm bis 18 nm betragen.

Die Barriereschicht beeinflusst außerdem die Korrosionsbeständigkeit der erfindungsgemäßen Beschichtung. Eine dünnere Barriereschicht führt zu einer stärkeren Korrosionsanfälligkeit der Beschichtung gegenüber einer feuchten Atmosphäre. Die Korrosion der Beschichtung führt insbesondere zu einem deutlichen Anstieg der Absorption von sichtbarem Licht durch die Beschichtung.

Die Barriereschicht beeinflusst zudem die optischen Eigenschaften der Wärmestrahlung reflektierenden Beschichtung, insbesondere den Farbeindruck bei Reflexion von Licht. Die Barriereschicht ist erfindungsgemäß dielektrisch. Der Brechungsindex des Materials der Barriereschicht beträgt bevorzugt größer oder gleich dem Brechungsindex des Materials der funktionellen Schicht. Der Brechungsindex des Materials der Barriereschicht beträgt besonders bevorzugt von 1,7 bis 2,3.

Die angegebenen Werte für Brechungsindizes sind bei einer Wellenlänge von 550 nm gemessen.

Die Barriereschicht enthält bevorzugt zumindest ein Oxid und / oder ein Nitrid. Das Oxid und / oder Nitrid kann stöchiometrisch oder nicht-stöchiometrisch zusammengesetzt sein. Die Barriereschicht enthält besonders bevorzugt zumindest Siliziumnitrid (Si₃N₄). Das ist besonders vorteilhaft im Hinblick auf den Einfluss der Barrriereschicht auf die Oxidation der funktionellen Schicht und auf die optischen Eigenschaften der Scheibe. Das Siliziumnitrid kann Dotierungen aufweisen, beispielsweise Titan, Zirkonium, Bor, Hafnium und / oder Aluminium. Das Siliziumnitrid ist ganz besonders bevorzugt mit Aluminium dotiert (Si₃N₄:Al) oder mit Zirkonium dotiert (Si₃N₄:Zr) oder mit Bor dotiert (Si₃N₄:B). Das ist besonders vorteilhaft im Hinblick auf die optischen Eigenschaften, die Biegbarkeit, die Glätte und die Emissivität der Beschichtung sowie die Geschwindigkeit des Aufbringens der Barriereschicht beispielsweise durch Kathodenzerstäubung.

Das Siliziumnitrid wird bevorzugt mittels magnetfeldunterstützter Kathodenzerstäubung abgeschieden mit einem Target, das zumindest Silizium enthält. Das Target zur Abscheidung einer Barriereschicht enthaltend Aluminium-dotiertes Siliziumnitrid enthält bevorzugt von 80 Gew. % bis 95 Gew. % Silizium und von 5 Gew. % bis 20 Gew. % Aluminium sowie herstellungsbedingte Beimengungen. Das Target zur Abscheidung einer Barriereschicht enthaltend Bor-dotiertes Siliziumnitrid enthält bevorzugt von 99,9990 Gew. % bis 99,9999 Gew. % Silizium und von 0,0001 Gew. % bis 0,001 Gew. % Bor sowie herstellungsbedingte Beimengungen. Das Target zur Abscheidung einer Barriereschicht enthaltend Zirkonium-dotiertes Siliziumnitrid enthält bevorzugt von 60 Gew. % bis 90 Gew. % Silizium und von 10 Gew. % bis 40 Gew. % Zirkonium sowie herstellungsbedingte Beimengungen. Die Abscheidung des Siliziumnitrids erfolgt bevorzugt unter Zugabe von Stickstoff als Reaktionsgas während der Kathodenzerstäubung.

Bei einer Temperaturbehandlung nach dem Aufbringen der erfindungsgemäßen Beschichtung kann das Siliziumnitrid teilweise oxidiert werden. Eine als Si₃N₄ abgeschiedene Barrriereschicht enthält dann nach der Temperaturbehandlung SiₓN_{y}O_{z}, wobei der Sauerstoffgehalt typischerweise von 0 Atom-% bis 35 Atom-% beträgt.

Die Barriereschicht kann alternativ aber auch beispielsweise zumindest WO₃, Nb₂O₅, Bi₂O₃, TiO₂, Zr₃N₄ und / oder AIN enthalten.

Die Haftschicht führt zu einer dauerhaft stabilen Haftung der oberhalb der Haftschicht abgeschiedenen Schichten auf dem Substrat. Die Haftschicht verhindert weiter die Anreicherung von aus dem Substrat diffundierenden Ionen im Grenzbereich zur funktionellen Schicht, insbesondere von Natriumionen, falls das Substrat aus Glas besteht. Solche Ionen können zur Korrosion und zu einer geringen Haftung der funktionellen Schicht führen. Die Haftschicht ist daher besonders vorteilhaft im Hinblick auf die Stabilität der funktionellen Schicht.

Das Material der Haftschicht weist bevorzugt einen Brechungsindex im Bereich des Brechungsindexes des Substrats auf. Das Material der Haftschicht weist bevorzugt einen geringeren Brechungsindex als das Material der funktionellen Schicht auf. Die Haftschicht enthält bevorzugt zumindest ein Oxid. Die Haftschicht enthält besonders bevorzugt Siliziumdioxid (SiO₂). Das ist besonders vorteilhaft im Hinblick auf die Haftung der oberhalb der Haftungsschicht abgeschiedenen Schichten auf dem Substrat. Das Siliziumdioxid kann Dotierungen aufweisen, beispielsweise Fluor, Kohlenstoff, Stickstoff, Bor, Phosphor und / oder Aluminium. Das Siliziumdioxid ist ganz besonders bevorzugt mit Aluminium dotiert (SiO₂:Al), mit Bor dotiert (SiO₂:B) oder mit Zirkonium dotiert (SiO₂:Zr). Das ist besonders vorteilhaft im Hinblick auf die optischen Eigenschaften der Beschichtung sowie die Geschwindigkeit des Aufbringens der Haftschicht beispielsweise durch Kathodenzerstäubung.

Das Siliziumdioxid wird bevorzugt mittels magnetfeldunterstützter Kathodenzerstäubung mit einem Target abgeschieden, welches zumindest Silizium enthält. Das Target zur Abscheidung einer Haftschicht enthaltend Aluminium-dotiertes Siliziumdioxid enthält bevorzugt von 80 Gew. % bis 95 Gew. % Silizium und von 5 Gew. % bis 20 Gew. % Aluminium sowie herstellungsbedingte Beimengungen. Das Target zur Abscheidung einer Haftschicht enthaltend Bor-dotiertes Siliziumdioxid enthält bevorzugt von 99,9990 Gew. % bis 99,9999 Gew. % Silizium und von 0,0001 Gew. % bis 0,001 Gew. % Bor sowie herstellungsbedingte Beimengungen. Das Target zur Abscheidung einer Haftschicht enthaltend Zirkonium-dotiertes Siliziumdioxid enthält bevorzugt von 60 Gew. % bis 90 Gew. % Silizium und von 10 Gew. % bis 40 Gew. % Zirkonium sowie herstellungsbedingte Beimengungen. Die Abscheidung des Siliziumdioxids erfolgt bevorzugt unter Zugabe von Sauerstoff als Reaktionsgas während der Kathodenzerstäubung.

Die Dotierung der Haftschicht kann auch die Glätte der oberhalb der Haftschicht aufgebrachten Schichten verbessern. Eine hohe Glätte der Schichten ist besonders günstig bei Verwendung der erfindungsgemäßen Scheibe im Kraftfahrzeugbereich, da hierdurch eine unangenehme raue Haptik der Scheiben vermieden wird. Ist die erfindungsgemäße Scheibe eine Seitenscheibe, so kann sie mit geringer Reibung zu den Dichtlippen bewegt werden.

Die Haftschicht kann aber auch andere Materialen enthalten, beispielsweise andere Oxide wie TiO₂, Al₂O₃, Ta₂O₅, Y₂O₃, ZnO und / oder ZnSnOₓ oder Nitride wie AIN.

Die Haftschicht weist bevorzugt eine Dicke von 10 nm bis 150 nm auf, besonders bevorzugt von 15 nm bis 50 nm, beispielsweise etwa 30 nm. Das ist besonders vorteilhaft im Hinblick auf die Haftung der erfindungsgemäßen Beschichtung und die Vermeidung der Diffusion von Ionen vom Substrat in die funktionelle Schicht.

Unterhalb der Haftschicht kann auch eine zusätzliche haftvermittelnde Schicht angeordnet sein, bevorzugt mit einer Dicke von 2 nm bis 15 nm. Beispielsweise kann die Haftschicht SiO₂ enthalten und die zusätzliche haftvermittelnde Schicht kann zumindest ein Oxid wie TiO₂, Al₂O₃, Ta₂O₅, Y₂O₃, ZnO und / oder ZnSnOₓ, oder ein Nitrid wie AIN enthalten. Durch die haftvermittelnde Schicht wird die Haftung der erfindungsgemäßen Beschichtung vorteilhaft weiter verbessert. Außerdem ermöglicht die haftvermittelnde Schicht eine verbesserte Anpassung der Farbwerte und der Transmission bzw. Reflexion.

Die funktionelle Schicht weist reflektierende Eigenschaften gegenüber Wärmestrahlung, insbesondere Infrarotstrahlung auf, ist im sichtbaren Spektralbereich jedoch weitgehend transparent. Die funktionelle Schicht enthält erfindungsgemäß zumindest ein transparentes, elektrisch leitfähiges Oxid (TCO). Der Brechungsindex des Materials der funktionellen Schicht beträgt bevorzugt von 1,7 bis 2,5. Die funktionelle Schicht enthält bevorzugt zumindest Indium-Zinn-Oxid (ITO). Damit werden besonders gute Ergebnisse hinsichtlich der Emissivität und der Biegbarkeit der erfindungsgemäßen Beschichtung erreicht.

Das Indium-Zinn-Oxid wird bevorzugt mittels magnetfeldunterstützter Kathodenzerstäubung mit einem Target aus Indium-Zinn-Oxid abgeschieden. Das Target enthält bevorzugt von 75 Gew. % bis 95 Gew. % Indiumoxid und von 5 Gew. % bis 25 Gew. % Zinnoxid sowie herstellungsbedingte Beimengungen. Die Abscheidung des Indium-Zinn-Oxids erfolgt bevorzugt unter einer Schutzgasatmosphäre, beispielsweise Argon. Dem Schutzgas kann auch ein geringer Anteil an Sauerstoff zugesetzt werden, beispielsweise um die Homogenität der funktionellen Schicht zu verbessern.

Das Target kann alternativ bevorzugt zumindest von 75 Gew. % bis 95 Gew. % Indium und von 5 Gew. % bis 25 Gew. % Zinn enthalten. Die Abscheidung des Indium-Zinn-Oxids erfolgt dann bevorzugt unter Zugabe von Sauerstoff als Reaktionsgas während der Kathodenzerstäubung.

Die Emissivität der erfindungsgemäßen Scheibe kann durch die Dicke der funktionellen Schicht beeinflusst werden. Die Dicke der funktionellen Schicht beträgt bevorzugt von 40 nm bis 200 nm, besonders bevorzugt von 90 nm bis 150 nm und ganz besonders bevorzugt von 100 nm bis 130 nm, beispielsweise etwa 120 nm. In diesem Bereich für die Dicke der funktionellen Schicht werden besonders vorteilhafte Werte für die Emissivität und eine besonders vorteilhafte Fähigkeit der funktionellen Schicht, eine mechanische Transformation wie Biegen oder Vorspannen ohne Beschädigung zu überstehen, erreicht.

Die funktionelle Schicht kann aber auch andere transparente, elektrisch leitfähige Oxide enthalten, beispielsweise Fluor-dotiertes Zinnoxid (SnO₂:F), Antimon-dotiertes Zinnoxid (SnO₂:Sb), Indium-Zink-Mischoxid (IZO), Gallium-dotiertes oder Aluminium-dotiertes Zinkoxid, Niobium-dotiertes Titanoxid, Cadmiumstannat und / oder Zinkstannat.

Die Antireflexionsschicht vermindert Reflexionen im sichtbaren Spektralbereich an der erfindungsgemäßen Scheibe. Durch die Antireflexionsschicht wird insbesondere eine hohe Transmission im sichtbaren Spektralbereich durch die erfindungsgemäße Scheibe erreicht und ein neutralerer Farbeindruck von reflektiertem und transmittiertem Licht. Die Antireflexionsschicht verbessert zudem die Korrosionsbeständigkeit der funktionellen Schicht. Das Material der Antireflexionsschicht weist bevorzugt einen Brechungsindex auf, der kleiner als der Brechungsindex des Materials der funktionellen Schicht ist. Der Brechungsindex des Materials der Antireflexionsschicht beträgt erfindungsgemäß kleiner oder gleich 1,8.

Die Antireflexionsschicht enthält erfindungsgemäß ein Oxid. Die Antireflexionsschicht enthält besonders bevorzugt Siliziumdioxid (SiO₂). Das ist besonders vorteilhaft im Hinblick auf die optischen Eigenschaften der Scheibe und die Korrosionsbeständigkeit der funktionellen Schicht. Das Siliziumdioxid kann Dotierungen aufweisen, beispielsweise Fluor, Kohlenstoff, Stickstoff, Bor, Phosphor und / oder Aluminium. Das Siliziumnitrid ist ganz besonders bevorzugt mit Aluminium dotiert (SiO₂:Al), mit Bor dotiert (SiO₂:B) oder mit Zirkonium dotiert (SiO₂:Zr).

Die Antireflexionsschicht kann aber auch andere Oxide mit einem Brechungsindex kleiner oder gleich 1,8 enthalten, beispielsweise Al₂O₃.

Die Antireflexionsschicht weist erfindungsgemäß eine Dicke von 20 nm bis 150 nm auf, bevorzugt von 40 nm bis 100 nm. Das ist besonders vorteilhaft im Hinblick auf eine geringe Reflexion und eine hohe Transmission von sichtbarem Licht sowie die Einstellung eines gezielten Farbeindrucks der Scheibe und die Korrosionsbeständigkeit der funktionellen Schicht.

In einer vorteilhaften Ausgestaltung der Erfindung ist oberhalb der Wärmestrahlung reflektierenden Beschichtung eine Abdeckschicht angeordnet. Die Abdeckschicht schützt die erfindungsgemäße Beschichtung vor Beschädigungen, insbesondere vor Verkratzen. Die Abdeckschicht enthält bevorzugt zumindest ein Oxid, besonders bevorzugt zumindest Titanoxid (TiOₓ), ZrO₂, HfO₂, Nb₂O₅, Ta₂O₅, Cr₂O₃, WO₃ und / oder CeO₂. Die Dicke der Abdeckschicht beträgt bevorzugt von 2 nm bis 50 nm, besonders bevorzugt von 5 nm bis 20 nm. Damit werden besonders gute Ergebnisse hinsichtlich der Kratzfestigkeit erzielt.

Das Substrat enthält bevorzugt Glas, besonders bevorzugt Flachglas, Floatglas, Quarzglas, Borosilikatglas, Kalk-Natron-Glas oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und / oder Gemische davon.

Die Dicke des Substrats kann breit variieren und so hervorragend den Erfordernissen im Einzelfall angepasst werden. Vorzugsweise werden Scheiben mit den Standardstärken von 1,0 mm bis 25 mm und bevorzugt von 1,4 mm bis 4,9 mm verwendet. Die Größe des Substrats kann breit variieren und richtet sich nach der erfindungsgemäßen Verwendung. Das Substrat weist beispielsweise im Fahrzeugbau und Architekturbereich übliche Flächen von 200 cm² bis zu 20 m² auf.

In einer vorteilhaften Ausgestaltung der Erfindung weist das Substrat eine Transmission im sichtbaren Spektralbereich von größer oder gleich 70 % auf. Das Substrat kann aber auch eine höhere Transmission aufweisen, beispielsweise größer oder gleich 85 % aufweisen. Da die erfindungsgemäße Beschichtung geringe Absorption aufweist, können so Scheiben mit hoher Transmission im sichtbaren Spektralbereich realisiert werden, die sich beispielsweise als Windschutzscheiben eignen. Die erfindungsgemäße Scheibe mit Wärmestrahlung reflektierender Beschichtung weist bevorzugt eine Gesamttransmission von größer 70 % auf. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben.

In einer alternativen vorteilhaften Ausgestaltung ist das Substrat getönt oder gefärbt. Das Substrat kann dabei bevorzugt eine Transmission im sichtbaren Spektralbereich von kleiner 50 %, beispielsweise kleiner 15 % aufweisen. Damit können Scheiben mit einer erfindungsgemäßen, transparenten Beschichtung und mit einer verminderten Transmission im sichtbaren Spektralbereich realisiert werden. Solche getönten oder gefärbten Scheiben können beispielsweise aus ästhetischen oder thermischen Gründen erwünscht sein.

Erfindungsgemäß ist das Substrat leicht oder stark in einer Richtung oder in mehreren Richtungen des Raumes gebogen. Solche gebogenen Scheiben treten insbesondere für Verglasungen im Fahrzeugbereich auf. Typische Krümmungsradien der gebogenen Scheiben liegen im Bereich von etwa 10 cm bis etwa 40 m. Der Krümmungsradius muss nicht über die gesamte Scheibe konstant sein, es können in einer Scheibe stärker und weniger stark gebogene Bereiche vorliegen. Es ist ein besonderer Vorteil der Erfindung, dass ein planes Substrat mit der erfindungsgemäßen Beschichtung versehen werden kann und dass die Beschichtung bei einem nachgelagerten Biegeprozess, der typischerweise bei erhöhten Temperaturen von beispielsweise 500°C bis 700°C ausgeführt wird, nicht beschädigt wird.

Die Barriereschicht der erfindungsgemäßen Beschichtung auf einem gebogenen Substrat weist bevorzugt eine Dicke von 10 nm bis 30 nm auf, besonders bevorzugt von 12 nm bis 30 nm, ganz besonders bevorzugt von 15 nm bis 25 nm und insbesondere von 18 nm bis 22 nm, beispielsweise etwa 20 nm. Das ist besonders vorteilhaft im Hinblick auf die Emissivität und die Transmission von sichtbarem Licht sowie die Fähigkeit der Beschichtung, eine mechanische Transformation wie Biegen oder Vorspannen des Substrats unbeschadet zu überstehen. Die Dicke der Barriereschicht kann aber auch beispielsweise von 10 nm bis 18 nm oder von 12 nm bis 18 nm betragen, was im Hinblick auf die Materialersparnis und die Transmission von sichtbarem Licht vorteilhaft ist.

Prinzipiell kann die Beschichtung natürlich auch auf ein gebogenes Substrat ausgebracht werden. Die dreidimensionale Form des Substrats hat dabei vorzugsweise keine Schattenzonen, so dass das Substrat beispielsweise durch Kathodenzerstäubung beschichtet werden kann.

Die erfindungsgemäße Beschichtung ist erfindungsgemäß auf die Oberfläche des Substrats aufgebracht, die dafür vorgesehen ist, in Einbaulage der Scheibe dem Innenraum eines Fahrzeugs zugewandt zu sein. Das ist besonders vorteilhaft im Hinblick auf den thermischen Komfort in dem Innenraum. Die Oberfläche, die dafür vorgesehen ist, in Einbaulage der Scheibe dem Innenraum zugewandt zu sein, wird im Sinne der Erfindung als innenraumseitige Oberfläche bezeichnet. Die erfindungsgemäße Beschichtung kann dabei bei hohen Außentemperaturen und Sonneneinstrahlung besonders effektiv die von der gesamten Scheibe in Richtung des Innenraums abgestrahlte Wärmestrahlung zumindest teilweise reflektieren. Bei niedrigen Außentemperaturen kann die erfindungsgemäße Beschichtung effektiv die aus dem Innenraum abgestrahlte Wärmestrahlung reflektieren und somit die Wirkung der kalten Scheibe als Wärmesenke verringern.

Die erfindungsgemäße Beschichtung kann ganzflächig auf die Oberfläche des Substrates aufgebracht sein. Die Oberfläche des Substrats kann aber auch beschichtungsfreie Bereiche aufweisen. Die Oberfläche des Substrats kann beispielsweise einen umlaufenden beschichtungsfreien Randbereich und / oder einen beschichtungsfreien Bereich, welcher als Datenübertragungsfenster oder Kommunikationsfenster dient, aufweisen. Die Scheibe ist in dem beschichtungsfreien Bereich für elektromagnetische und insbesondere infrarote Strahlung durchlässig.

Das Substrat kann auch auf beiden Oberflächen mit jeweils einer erfindungsgemäßen Wärmestrahlung reflektierenden Beschichtung versehen sein.

In einer vorteilhaften Ausgestaltung der Erfindung ist das Substrat über zumindest eine thermoplastische Zwischenschicht mit einer Deckscheibe zu einer Verbundscheibe verbunden. Die Deckscheibe ist bevorzugt dafür vorgesehen, in Einbaulage der Verbundscheibe der äußeren Umgebung zugewandt zu sein, während das Substrat dem Innenraum zugewandt ist. Die Deckscheibe kann alternativ aber auch dafür vorgesehen sein, in Einbaulage der Verbundscheibe dem Innenraum zugewandt zu sein. Die erfindungsgemäße Beschichtung ist bevorzugt auf der von der Deckscheibe abgewandten Oberfläche des Substrats angeordnet, sofern dies die innenraumseitige Oberfläche ist.

Die Deckscheibe enthält bevorzugt Glas, besonders bevorzugt Flachglas, Floatglas, Quarzglas, Borosilikatglas, Kalk-Natron-Glas oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und / oder Gemische davon. Die Deckscheibe weist bevorzugt eine Dicke von 1,0 mm bis 25 mm und besonders bevorzugt von 1,4 mm bis 4,9 mm auf.

Die thermoplastische Zwischenschicht enthält bevorzugt thermoplastische Kunststoffe, beispielsweise Polyvinylbutyral (PVB), Ethylenvinylacetat (EVA), Polyurethan (PU), Polyethylenterephthalat (PET) oder mehrere Schichten davon, bevorzugt mit Dicken von 0,3 mm bis 0,9 mm.

Die Verbundscheibe weist in einer bevorzugten Ausgestaltung eine Gesamttransmission von größer als 70 % und eine innenraumseitige Emissivität von kleiner oder gleich 25 % auf.

In einer alternativen vorteilhaften Ausgestaltung weist die Verbundscheibe eine deutlich verminderte Transmission von sichtbarem Licht auf, beispielsweise von kleiner 50 %, kleiner 15 %, kleiner 10 % oder kleiner 6 %. Das kann durch die Verwendung einer getönten oder gefärbten Deckscheibe oder eines getönten oder gefärbten Substrats erreicht werden. Alternativ kann eine getönte oder gefärbte thermoplastische Zwischenschicht verwendet werden oder eine getönte oder gefärbte Folie in die thermoplastische Zwischenschicht eingelegt werden.

In einer bevorzugten Ausgestaltung ist das Substrat über zumindest eine thermoplastische Zwischenschicht mit einer Deckscheibe zu einer Verbundscheibe verbunden. Das Substrat ist dafür vorgesehen, in Einbaulage einem Innenraum zugewandt zu sein, während die Deckscheibe der äußeren Umgebung zugewandt ist. Die erfindungsgemäße Wärmestrahlung reflektierende Beschichtung ist auf der von der Deckscheibe abgewandten Oberfläche des Substrats aufgebracht, also auf der innenraumseitigen Oberfläche des Substrats. Die Dicke der Barriereschicht beträgt von 10 nm bis 40 nm, bevorzugt von 10 nm bis 30 nm. Die Verbundscheibe weist eine Transmission von sichtbarem Licht von kleiner 15 %, bevorzugt kleiner 10 % auf, was durch eine getönte Deckscheibe, ein getöntes Substrat und/oder eine getönte thermoplastische Zwischenschicht erreicht wird. Die Deckscheibe und das Substrat sind gebogen. Eine solche Verbundscheibe mit geringere Transmission und der erfindungsgemäßen Beschichtung ist besonders vorteilhaft im Hinblick auf den thermischen Komfort und es wird ein vorteilhaft geringer Wert für die durchgelassene Sonnenenergie (TTS-Wert) erreicht. Die Wärmestrahlung reflektierende Beschichtung vermindert dabei die Abstrahlung von durch die getönten Scheiben absorbierter Strahlungsenergie in den Innenraum hinein. Im angegebenen Bereich für die Dicke der Barriereschicht weist die erfindungsgemäße Beschichtung eine vorteilhafte Biegbarkeit und Korrosionsbeständigkeit auf. Zudem hat sich überraschend gezeigt, dass durch eine Barriereschicht mit einer Dicke von höchstens 40 nm ästhetische Farbwerte erreicht werden können.

In einer besonders vorteilhaften Ausgestaltung ist die erfindungsgemäße Beschichtung auf der dem Innenraum zugewandten Oberfläche des Substrats aufgebracht, wobei das Substrat die dem Innenraum zugewandte Scheibe einer Verbundscheibe darstellt. Auf der der Deckscheibe zugewandten Oberfläche des Substrats, auf der dem Substrat zugewandten Oberfläche der Deckscheibe oder auf einer Trägerfolie in der thermoplastischen Zwischenschicht ist weiter eine Sonnenschutzbeschichtung aufgebracht. Die Sonnenschutzbeschichtung ist dort vorteilhaft vor Korrosion und mechanischer Beschädigung geschützt. Die Sonnenschutzbeschichtung umfasst bevorzugt zumindest eine metallische Schicht auf Basis von Silber oder einer silberhaltigen Legierung mit einer Dicke von 5 nm bis 25 nm. Besonders gute Ergebnisse werden mit zwei oder drei funktionellen Schichten erzielt, die durch dielektrische Schichten mit Dicken von 10 nm bis 100 nm voneinander getrennt sind. Die Sonnenschutzbeschichtung reflektiert Anteile der einfallenden Sonnenstrahlung außerhalb des sichtbaren Spektralbereichs, insbesondere im infraroten Spektralbereich. Durch die Sonnenschutzbeschichtung wird die Aufheizung des Innenraums durch direkte Sonneneinstrahlung verringert. Zudem verringert die Sonnenschutzbeschichtung die Erwärmung der in Einfallsrichtung der Sonnenstrahlung hinter der Sonnenschutzbeschichtung angeordneten Elemente der Verbundscheibe und damit die von der Verbundscheibe ausgesandte Wärmestrahlung. Durch die Kombination der Sonnenschutzbeschichtung mit der erfindungsgemäßen Beschichtung zur Reflexion von Wärmestrahlung wird der thermische Komfort im Innenraum vorteilhaft weiter verbessert.

Das Substrat kann beispielsweise auch mit einer weiteren Scheibe über Abstandshalter zu einer Isolierverglasung verbunden sein. Das Substrat kann auch mit mehr als einer weiteren Scheibe über thermoplastische Zwischenschichten und / oder Abstandshalter verbunden sein.

Die Erfindung umfasst weiter ein Verfahren zur Herstellung einer erfindungsgemäßen Scheibe mit Wärmestrahlung reflektierender Beschichtung, wobei auf ein Substrat nacheinander zumindest
(a) eine Haftschicht,
(b) eine funktionelle Schicht, die zumindest ein transparentes, elektrisch leitfähiges Oxid (TCO) enthält,
(c) eine dielektrische Barriereschicht und
(d) eine Antireflexionsschicht aufgebracht werden und
(e) das Substrat auf eine Temperatur von mindestens 200°C erwärmt wird.

In einer vorteilhaften Ausführung der Erfindung wird nach dem Aufbringen der Antireflexionsschicht eine Abdeckschicht aufgebracht.

Die einzelnen Schichten werden durch an sich bekannte Verfahren abgeschieden, bevorzugt durch magnetfeldunterstützte Kathodenzerstäubung. Das ist besonders vorteilhaft im Hinblick auf eine einfache, schnelle, kostengünstige und gleichmäßige Beschichtung des Substrats. Die Kathodenzerstäubung erfolgt in einer Schutzgasatmosphäre, beispielsweise aus Argon, beziehungsweise in einer Reaktivgasatmosphäre, beispielsweise durch Zugabe von Sauerstoff oder Stickstoff.

Die einzelnen Schichten können aber auch durch andere, dem Fachmann bekannte Verfahren aufgebracht werden, beispielsweise durch Aufdampfen oder chemische Gasphasenabscheidung (chemical vapour deposition, CVD), durch plasmagestützte Gasphasenabscheidung (PECVD) oder durch nasschemische Verfahren.

Die Scheibe wird in Verfahrensschritt (e) nach dem Aufbringen der Wärmestrahlung reflektierenden Beschichtung einer Temperaturbehandlung unterzogen. Dabei wird das Substrat mit der erfindungsgemäßen Beschichtung auf eine Temperatur von mindestens 200°C, besonders bevorzugt mindestens 300°C erhitzt. Durch die Temperaturbehandlung wird insbesondere die Kristallinität der funktionellen Schicht verbessert. Dadurch werden die Transmission von sichtbarem Licht und die reflektierenden Eigenschaften gegenüber Wärmestrahlung deutlich verbessert.

In einer bevorzugten Ausführung des erfindungsgemäßen Verfahrens erfolgt die Temperaturbehandlung in Verfahrensschritt (e) im Rahmen eines Biegeprozesses. Dabei wird das Substrat mit der erfindungsgemäßen Beschichtung im erhitzten Zustand in eine oder mehrere Richtungen des Raumes gebogen. Die Temperatur, auf die das Substrat erhitzt wird, beträgt bevorzugt von 500°C bis 700°C. Es ist ein besonderer Vorteil der erfindungsgemäßen Beschichtung zur Reflexion von Wärmestrahlung, dass sie einem solchen Biegeprozess unterzogen werden kann, ohne dabei beschädigt zu werden.

Natürlich können zeitlich vor oder nach dem Biegeprozess weitere Temperaturbehandlungsschritte erfolgen. Eine Temperaturbehandlung kann alternativ auch mittels Laserstrahlung durchgeführt werden.

Das Substrat kann in einer vorteilhaften Ausführung nach der Temperaturbehandlung in Verfahrensschritt (e) und nach dem Biegen mit einer Vorspannung oder Teilvorspannung versehen werden. Dazu wird das Substrat in an sich bekannter Weise geeignet abgekühlt. Ein vorgespanntes Substrat weist typischerweise Oberflächendruckspannungen von mindestens 69 MPa auf. Ein teilvorgespanntes Substrat weist typischerweise Oberflächendruckspannungen von 24 MPa bis 52 MPa auf. Ein vorgespanntes Substrat eignet sich als Einscheibensicherheitsglas beispielsweise als Seitenscheibe oder Heckscheibe eines Kraftfahrzeugs.

In einer vorteilhaften Ausführung der Erfindung wird das Substrat nach der Temperaturbehandlung und nach dem Biegeprozess und gegebenenfalls dem Vorspannprozess über zumindest eine thermoplastische Zwischenschicht mit einer Deckscheibe zu einer Verbundscheibe verbunden. Das Substrat wird dabei bevorzugt so in dem Verbund angeordnet, dass die mit der erfindungsgemäßen Beschichtung versehene Oberfläche von der thermoplastischen Zwischenschicht und der Deckscheibe abgewandt ist.

Die Erfindung umfasst weiter die Verwendung der erfindungsgemäßen Scheibe mit Wärmestrahlung reflektierender Beschichtung als Windschutzscheibe, Heckscheibe, Seitenscheibe und / oder Dachscheibe.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch eine Ausgestaltung der erfindungsgemäßen Scheibe mit Wärmestrahlung reflektierender Beschichtung,
- Fig. 2: einen Querschnitt durch eine weitere Ausgestaltung der erfindungsgemäßen Scheibe mit Wärmestrahlung reflektierender Beschichtung,
- Fig. 3: einen Querschnitt durch eine Verbundscheibe umfassend eine erfindungsgemäße Scheibe,
- Fig. 4: ein Diagramm der Anzahl der Risse in der Wärmestrahlung reflektierenden Beschichtung, der Absorption und der Emissivität von erfindungsgemäßen Scheiben nach einem Biegeprozess sowie der Änderung der Absorption von erfindungsgemäßen Scheiben in einem Druckkochtopf-Test in Abhängigkeit von der Dicke der Barriereschicht,
- Fig. 5: ein Diagramm der Transmission im sichtbaren Spektralbereich durch eine erfindungsgemäße Scheibe in Abhängigkeit von der Dicke der Antireflexionsschicht und
- Fig. 6: ein detailliertes Flussdiagramm einer Ausführungsform des erfindungsgemäßen Verfahrens.

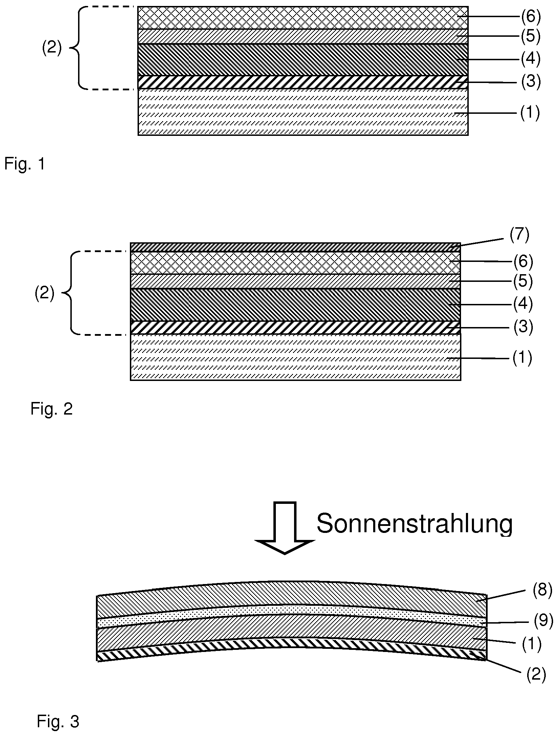

Fig. 1 zeigt einen Querschnitt durch eine Ausgestaltung der erfindungsgemäßen Scheibe mit dem Substrat 1 und der Wärmestrahlung reflektierenden Beschichtung 2. Das Substrat 1 enthält Kalk-Natron-Glas und weist eine Dicke von 2,9 mm auf. Die Beschichtung 2 umfasst eine Haftschicht 3, eine funktionelle Schicht 4, eine Barriereschicht 5 und eine Antireflexionsschicht 6. Die Schichten sind in der angegebenen Reihenfolge mit wachsendem Abstand zum Substrat 1 angeordnet. Die genaue Schichtfolge mit geeigneten Materialien und beispielhaften Schichtdicken ist in Tabelle 1 dargestellt.

Die einzelnen Schichten der Beschichtung 2 wurden durch magnetfeldunterstützte Kathodenstrahlzerstäubung abgeschieden. Das Target zur Abscheidung der Haftschicht 3 und der Antireflexionsschicht 6 enthielt 92 Gew. % Silizium und 8 Gew. % Aluminium. Die Abscheidung erfolgte unter Zugabe von Sauerstoff als Reaktionsgas während der Kathodenzerstäubung. Das Target zur Abscheidung der funktionellen Schicht 4 enthielt 90 Gew. % Indiumoxid und 10 Gew. % Zinnoxid. Die Abscheidung erfolgte unter einer Argon-Schutzgasatmosphäre mit einem Sauerstoffanteil von kleiner 1 %. Das Target zur Abscheidung der Barriereschicht 5 enthielt 92 Gew. % Silizium und 8 Gew. % Aluminium. Die Abscheidung erfolgte unter Zugabe von Stickstoff als Reaktionsgas während der Kathodenzerstäubung.

**Tabelle 1**

| Bezugszeichen | | Material | Dicke |
|---|---|---|---|
| 6 | 2 | SiO₂:Al | 40 nm |
| 5 | | Si₃N₄:Al | 20 nm |
| 4 | | ITO | 120 nm |
| 3 | | SiO₂:Al | 30 nm |
| 1 | | Glas | 2,9 mm |

Fig. 2 zeigt einen Querschnitt durch eine weitere Ausgestaltung der erfindungsgemäßen Scheibe mit dem Substrat 1 und der Wärmestrahlung reflektierenden Beschichtung 2. Die Beschichtung 2 ist wie in Figur 1 ausgestaltet mit der Haftschicht 3, der funktionellen Schicht 4, der Barriereschicht 5 und der Antireflexionsschicht 6. Oberhalb der Beschichtung 2 ist eine Abdeckschicht 7 angeordnet. Die Abdeckschicht enthält Ta₂O₅ und weist eine Dicke von 10 nm auf. Durch die Abdeckschicht wird die Beschichtung 2 vorteilhaft vor mechanischer Beschädigung, insbesondere vor Verkratzen geschützt.

Fig. 3 zeigt einen Querschnitt durch eine erfindungsgemäße Scheibe mit Wärmestrahlung reflektierender Beschichtung 2 als Teil einer Verbundscheibe. Das Substrat 1 ist über eine thermoplastische Zwischenschicht 9 mit einer Deckscheibe 8 verbunden. Die Verbundscheibe ist als Windschutzscheibe für ein Kraftfahrzeug vorgesehen. Die Verbundscheibe ist gebogen, wie es für Scheiben im Automobilbereich üblich ist. Die Oberfläche des Substrats 1, welche von der Deckscheibe 8 und der thermoplastischen Zwischenschicht 9 abgewandt ist, ist mit der erfindungsgemäßen Beschichtung 2 versehen. In Einbaulage der Verbundscheibe ist die Deckscheibe 8 der äußeren Umgebung und das Substrat 1 dem Fahrzeuginnenraum zugewandt. Die Deckscheibe enthält Kalk-Natron-Glas und weist eine Dicke von 2,1 mm auf. Die thermoplastische Zwischenschicht 9 enthält Polyvinylbutyral (PVB) und weist eine Dicke von 0,76 mm auf.

Die erfindungsgemäße Beschichtung 2 weist eine geringe Absorption von sichtbarem Licht auf. Die Beschichtung 2 verringert daher die Transmission im sichtbaren Spektralbereich durch die Verbundscheibe nicht wesentlich. Die Verbundscheibe weist eine Transmission im sichtbaren Spektralbereich von größer als 70 % auf und erfüllt die gesetzlichen Vorgaben für Windschutzscheiben. Die erfindungsgemäße Beschichtung 2 ist zudem stabil gegen Korrosion durch Luftsauerstoff und sonstige Umgebungseinflüsse und kann daher auf der dem Fahrzeuginnenraum zugewandten Oberfläche der Verbundscheibe angeordnet sein, wo sie besonders effektiv zur Verbesserung des thermischen Komforts im Fahrzeuginnenraum führt. Die Beschichtung 2 reflektiert einen Teil der über die Verbundscheibe einfallenden Sonnenstrahlung, insbesondere im Infrarotbereich. Die von der warmen Verbundscheibe in Richtung des Fahrzeuginnenraums ausgesandte Wärmestrahlung wird außerdem durch die niedrige Emissivität der Beschichtung 2 zumindest teilweise unterdrückt. Dadurch wird der Innenraum im Sommer weniger stark erwärmt. Im Winter wird die vom Innenraum ausgehende Wärmestrahlung reflektiert. Die kalte Verbundscheibe wirkt daher weniger stark als unangenehme Wärmesenke. Außerdem kann die benötigte Heizleistung der Klimaanlage reduziert werden, was zu einer erheblichen Energieersparnis führt.

Die Beschichtung 2 wird bevorzugt vor dem Biegen des Substrats 1 auf das plane Substrat 1 aufgebracht. Die Beschichtung eines planen Substrats ist technisch deutlich einfacher als die Beschichtung eines gebogenen Substrats. Das Substrat 1 wird danach typischerweise auf eine Temperatur von 500°C bis 700°C, beispielsweise 640°C erhitzt. Die Temperaturbehandlung ist einerseits erforderlich, um das Substrat 1 zu biegen. Andererseits wird die Transmission von sichtbarem Licht und die Emissivität der Beschichtung 2 regelmäßig durch die Temperaturbehandlung verbessert. Die erfindungsgemäße Barriereschicht 5 beeinflusst das Ausmaß der Oxidation der funktionellen Schicht 4 während der Temperaturbehandlung. Der Sauerstoffgehalt der funktionellen Schicht 4 ist nach der Temperaturbehandlung ausreichend gering, damit die Beschichtung 2 einem Biegeprozess unterzogen werden kann. Ein zu hoher Sauerstoffgehalt würde zu einer Beschädigung der funktionellen Schicht 4 beim Biegen führen. Der Sauerstoffgehalt der funktionellen Schicht 4 ist nach der Temperaturbehandlung andererseits ausreichend hoch für eine hohe Transmission von sichtbarem Licht und eine niedrige Emissivität. Das ist ein großer Vorteil der vorliegenden Erfindung.

In einer alternativen Ausgestaltung kann die Verbundscheibe auch eine geringe Transmission von sichtbarem Licht von beispielsweise kleiner 10 % aufweisen. Solche Verbundscheiben können beispielsweise als Heckscheibe oder Dachscheibe verwendet werden. Durch die erfindungsgemäße Beschichtung 2, welche eine Barriereschicht 5 mit einer Dicke von 10 nm bis 40 nm aufweist, werden neben der Biegbarkeit und Korrosionsbeständigkeit auch vorteilhafte Farbwerte erreicht.

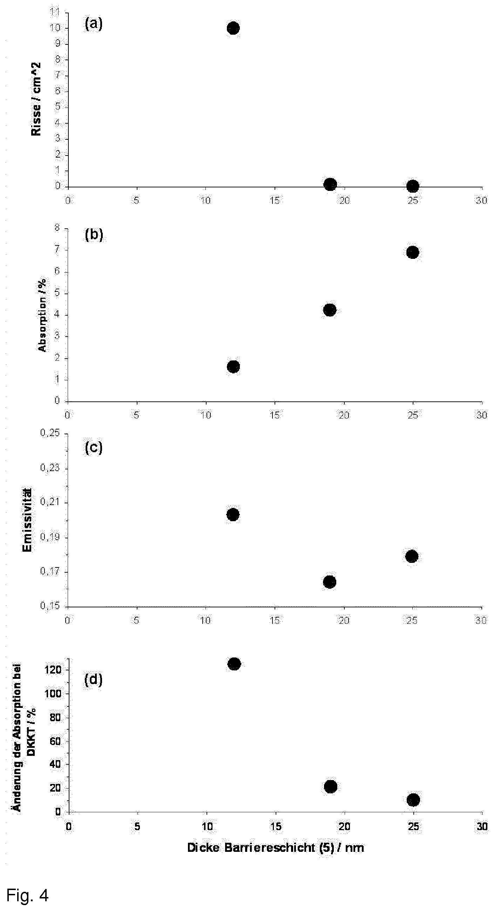

Fig. 4 zeigt Beobachtungen an drei Testscheiben. Die Testscheiben wurden mittels Kathodenzerstäubung mit den bei Figur 1 genannten Targets und Bedingungen abgeschieden. Die Testscheiben mit dem Substrat 1 und der Wärmestrahlung reflektierenden Beschichtung 2 unterschieden sich in der Dicke der Barriereschicht 5. Die Schichtenfolge, Materialien und Schichtdicken der Testscheiben sind in Tabelle 2 zusammengefasst.

**Tabelle 2**

| Bezugszeichen | | Material | Dicke | | |
|---|---|---|---|---|---|
| | | | Beispiel 1 | Beispiel 2 | Beispiel 3 |
| 2 | 6 | SiO₂:Al | 45 nm | 45 nm | 45 nm |
| | 5 | Si₃N₄:Al | 12 nm | 19 nm | 25 nm |
| | 4 | ITO | 120 nm | 120 nm | 120 nm |
| | 3 | SiO₂:Al | 30 nm | 30 nm | 30 nm |
| 1 | | Glas | 2,9 mm | 2,9 mm | 2,9 mm |

Das Substrat 1 war zunächst plan und wurde mit der erfindungsgemäßen Beschichtung 2 versehen. Das Substrat 1 mit der Beschichtung 2 wurde anschließend für 10 Minuten einer Temperaturbehandlung bei 640°C unterzogen, dabei gebogen und mit einem Krümmungsradius von etwa 30 cm versehen. Die Barriereschicht 5 wurde als Aluminium-dotiertes Si₃N₄ abgeschieden und ist als solches in der Tabelle angegeben. Aufgrund einer teilweisen Oxidation während der Temperaturbehandlung kann die Barriereschicht allerdings auch SiₓN_{y}O_{z} enthalten.

In Teil (a) des Diagramms ist die Anzahl der Risse pro cm² in der Beschichtung 2 nach dem Biegeprozess in Abhängigkeit von der Dicke der Barriereschicht 5 aufgetragen. Es ist zu erkennen, dass die Anzahl der Risse stark zunimmt, wenn die Barriereschicht 5 zu dünn ist. Der Grund hierfür scheint eine zu starke Oxidation der funktionellen Schicht 4 während der Temperaturbehandlung zu sein. Die zu starke Oxidation der funktionellen Schicht 4 kann durch eine zu dünne Barriereschicht 5 nicht wirksam vermindert werden.

In Teil (b) des Diagramms ist die Absorption von sichtbarem Licht bei Durchtritt durch die Scheibe in Abhängigkeit von der Dicke der Barriereschicht 5 aufgetragen. Die Absorption nimmt mit der Dicke der Barriereschicht 5 zu. Die Absorption durch die Beschichtung 2 ist vom Sauerstoffgehalt der funktionellen Schicht 4 abhängig. Der Sauerstoffgehalt der funktionellen Schicht 4 ist von der Dicke der Barriereschicht 5 abhängig. Eine zu dicke Barriereschicht 5 führt zu einem zu geringen Sauerstoffgehalt der funktionellen Schicht 4. Ein zu geringer Sauerstoffgehalt der funktionellen Schicht 4 führt zu einer hohen Absorption und beeinträchtigt somit die Durchsicht durch die Scheibe. Zudem verschieben sich die Farbwerte der Scheibe mit zunehmender Dicke der Barriereschicht 5 in unerwünschter Weise.

In Teil (c) des Diagramms ist die Emissivität der Testscheiben in Abhängigkeit von der Dicke der Barriereschicht 5 aufgetragen. Die Emissivität ist von der Dicke der Barriereschicht 5 abhängig. Dieser Effekt scheint durch den von der Barriereschicht 5 beeinflussten Sauerstoffgehalt der funktionellen Schicht 4 hervorgerufen zu sein.

In Teil (d) des Diagramms ist ein Ergebnis eines Druckkochtopf-Tests (DKKT) dargestellt. Beim Druckkochtopf-Test wird die Scheibe in einem teilweise mit Wasser gefüllten Metallbehälter hermetisch eingeschlossen und für 48 Stunden auf eine Temperatur von 120°C erhitzt. Dabei ist die Scheibe erhöhtem Druck und heißem Wasserdampf ausgesetzt und die Scheibe kann auf Korrosionsbeständigkeit geprüft werden. Im Diagramm ist die relative Änderung der Absorption der Scheiben nach dem Druckkochtopf-Test verglichen mit der Absorption von dem Druckkochtopf-Test in Abhängigkeit von der Dicke der Barriereschicht 5 angegeben. Eine große Änderung der Absorption deutet auf die Korrosion der Beschichtung 2 während des Druckkochtopf-Tests hin. Es ist zu erkennen, dass die Korrosionsbeständigkeit der Beschichtung 2 mit steigender Dicke der Barriereschicht 5 zunimmt.

Der besondere Vorteil des erfindungsgemäßen Bereichs für die Dicke der Barriereschicht 5 ist aus dem Diagramm ersichtlich. Die Dicke der Barriereschicht 5 von 10 nm bis 40 nm ist erfindungsgemäß so gewählt, dass die Beschichtung 2 einerseits einem Biegeprozess unterzogen werden kann (d.h. nach dem Biegen keine oder nur eine geringe Anzahl von Rissen aufweist) und andererseits eine hinreichend niedrige Absorption (kleiner etwa 15 %), eine hinreichend geringe Emissivität (kleiner etwa 25 %) und eine vorteilhafte Korrosionsbeständigkeit aufweist.

Besonders gute Ergebnisse hinsichtlich der Biegbarkeit, Absorption von sichtbarem Licht und der Emissivität werden erzielt, wenn die Dicke der Barriereschicht 5 von 12 nm bis 30 nm und insbesondere 15 nm bis 25 nm beträgt. Durch eine Barriereschicht 5 mit einer Dicke von 15 nm bis 25 nm wird eine Absorption von kleiner etwa 7% und eine Emissivität von kleiner etwa 20% erreicht.

In Tabelle 3 sind einige Eigenschaften der Testscheiben zusammengefasst. R_{Quadrat} ist dabei der Flächenwiderstand der Beschichtung 2. A bezeichnet die Absorption der Scheiben von sichtbarem Licht. Die Absorption der Beschichtung 2 ergibt sich daraus durch Subtraktion der Absorption des unbeschichteten Substrats 1 von etwa 1,5 %. εₙ bezeichnet die normale Emissivität der Scheiben. T_{L} bezeichnet die Transmission der Scheiben für sichtbares Licht. R_{L} bezeichnet die Reflektivität der Scheiben für sichtbares Licht. Die Angaben a* und b* beziehen sich auf die Farbkoordinaten bei Reflexion gemäß dem kolorimetrischen Modell (L*a*b*-Farbraum), betrachtet von der mit der Beschichtung 2 versehenen Seite der Scheibe aus.

**Tabelle 3**

| | vor Temperaturbehandlung | | nach Temperaturbehandlung und Biegen | | | | | | |
|---|---|---|---|---|---|---|---|---|---|
| | R_{Quadrat} [Ohm/Quadrat] | A | R_{Quadrat} [Ohm/Quadrat] | εₙ | A | T_{L} | R_{L} | a* | b* |
| Beispiel 1 | 109 | 19% | 21 | 0,2 | 2% | 93% | 5% | 4,5 | -14 |
| Beispiel 2 | 109 | 20% | 15 | 0,16 | 4% | 91% | 5% | 2,5 | -11 |
| Beispiel 3 | 113 | 20% | 19 | 0,18 | 7% | 88% | 5% | 1,8 | -9 |

Der Flächenwiderstand und die Absorption vor der Temperaturbehandlung sind vom Sauerstoffgehalt der funktionellen Schicht 4 abhängig. Das Target und der Sauerstoffgehalt der Atmosphäre beim Aufbringen der funktionellen Schicht 4 sind dazu geeignet gewählt. Durch die Temperaturbehandlung wurde der Flächenwiderstand deutlich verringert, was zu einer vorteilhaft niedrigen Emissivität führte. Die Scheiben wiesen eine hohe Transmission und vorteilhafte Farbwerte auf und können daher beispielsweise als Windschutzscheiben verwendet werden.

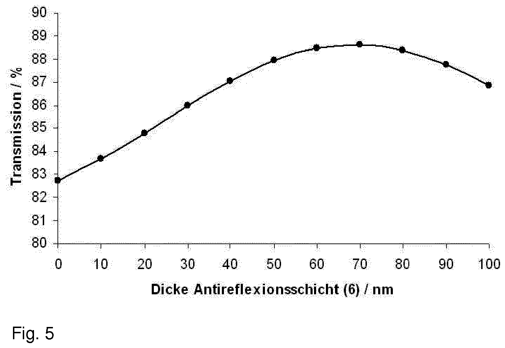

Fig. 5 zeigt das Ergebnis einer Simulation der Transmission im sichtbaren Spektralbereich in Abhängigkeit von der Dicke der Antireflexionsschicht 6. Das Substrat 1, die Haftschicht 3, die funktionelle Schicht 4 und die Barriereschicht 5 waren in der Simulation wie in Tabelle 2, Beispiel 2 ausgestaltet. Die Dicke der Antireflexionsschicht 6 aus SiO₂ wurde bei der Simulation variiert. Eine Antireflexionsschicht 6 mit einer Dicke im Bereich von 40 nm bis 100 nm führt infolge einer deutlich verminderten Reflexion an der Beschichtung 2 zu einer besonders vorteilhaften Transmission durch die Scheibe von größer oder gleich etwa 87 %.

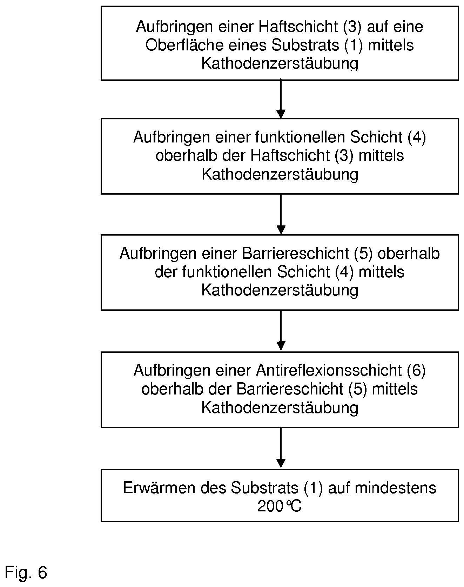

Fig. 6 zeigt ein Flussdiagramm eines Ausführungsbeispiels des erfindungsgemäßen Verfahrens zur Herstellung einer Scheibe mit Wärmestrahlung reflektierender Beschichtung 2. Auf eine Oberfläche eines Substrats 1 werden nacheinander eine Haftschicht 3, eine funktionelle Schicht 4, eine Barriereschicht 5 und eine Antireflexionsschicht 6 mittels magnetfeldunterstützter Kathodenzerstäubung aufgebracht. Die aufgebrachten Schichten 3,4,5,6 bilden die Wärmestrahlung reflektierende Beschichtung 2. Das Substrat 1 wird anschließend einer Temperaturbehandlung bei mindestens 200°C unterzogen.

Die Temperaturbehandlung kann auch im Rahmen eines Biegeprozesses erfolgen, bei der das Substrat 1 beispielsweise auf eine Temperatur von 640°C erhitzt und gebogen wird.

Das Substrat 1 kann anschließend beispielsweise über eine thermoplastische Zwischenschicht 9 mit einer gleichermaßen gebogenen Deckscheibe 8 zu einer Verbundscheibe verbunden. Das Substrat 1 wird im Verbund so angeordnet, dass die Oberfläche des Substrats 1, auf welche die Beschichtung 2 aufgebracht ist, von der thermoplastischen Zwischenschicht 9 abgewandt ist.

Das Substrat 1 kann nach der Temperaturbehandlung und gegebenenfalls nach dem Biegen auch mit einer Vorspannung versehen werden.

### Bezugszeichenliste:

- (1): Substrat
- (2): Wärmestrahlung reflektierende Beschichtung
- (3): Haftschicht
- (4): funktionelle Schicht
- (5): Barriereschicht
- (6): Antireflexionsschicht
- (7): Abdeckschicht
- (8): Deckscheibe
- (9): thermoplastische Zwischenschicht

## Patentansprüche

1. Kraftfahrzeug-Scheibe, umfassend mindestens ein gebogenes Substrat (1) und mindestens eine Wärmestrahlung reflektierende Beschichtung (2) auf der innenraumseitigen Oberfläche des Substrats (1), wobei die Beschichtung (2) auf dem Substrat (1) mindestens
- eine Haftschicht (3),
- oberhalb der Haftschicht (3) eine funktionelle Schicht (4), die zumindest ein transparentes, elektrisch leitfähiges Oxid (TCO) enthält,
- oberhalb der funktionellen Schicht (4) eine dielektrische Barriereschicht (5) zur Regulierung von Sauerstoffdiffusion und
- oberhalb der Barriereschicht (5) eine Antireflexionsschicht (6) umfasst, welche ein Oxid mit einem Brechungsindex kleiner oder gleich 1,8 enthält und eine Dicke von 20 nm bis 150 nm aufweist,
und wobei die Barriereschicht (5) eine Dicke von 10 nm bis 40 nm aufweist.

2. Scheibe nach Anspruch 1, wobei die Barriereschicht (5) eine Dicke von 10 nm bis 30 nm, bevorzugt von 12 nm bis 30 nm, besonders bevorzugt von 15 nm bis 25 nm aufweist.

3. Scheibe nach einem der Ansprüche 1 bis 2, wobei das Substrat (1) über zumindest eine thermoplastische Zwischenschicht (9) mit einer Deckscheibe (8) zu einer Verbundscheibe verbunden ist und wobei die Beschichtung (2) auf der von der Deckscheibe (8) abgewandten Oberfläche des Substrats (1) angeordnet ist.

4. Scheibe nach Anspruch 3, wobei die Verbundscheibe eine Transmission von sichtbarem Licht kleiner 10 % aufweist.

5. Scheibe nach Anspruch 3 oder 4, wobei auf der zur Deckscheibe (8) hingewandten Oberfläche des Substrats (1) oder auf der zum Substrat (1) hingewandten Oberfläche der Deckscheibe (8) oder in der thermoplastischen Zwischenschicht (9) eine Sonnenschutzbeschichtung angeordnet ist.

6. Scheibe nach einem der Ansprüche 1 bis 5, wobei die funktionelle Schicht (4) zumindest Fluor-dotiertes Zinnoxid, Antimon-dotiertes Zinnoxid und / oder Indium-Zinn-Oxid enthält und bevorzugt eine Dicke von 40 nm bis 200 nm, besonders bevorzugt von 90 nm bis 150 nm aufweist.

7. Scheibe nach einem der Ansprüche 1 bis 6, wobei die Barriereschicht (5) ein Material mit einem Brechungsindex von 1,7 bis 2,3 enthält, bevorzugt zumindest ein Oxid und / oder ein Nitrid, besonders bevorzugt Siliziumnitrid und ganz besonders bevorzugt Aluminium-dotiertes Siliziumnitrid, Zirkonium-dotiertes Siliziumnitrid oder Bor-dotiertes Siliziumnitrid.

8. Scheibe nach einem der Ansprüche 1 bis 7, wobei die Haftschicht (3) zumindest ein Oxid, bevorzugt Siliziumdioxid, besonders bevorzugt Aluminium-dotiertes Siliziumdioxid, Zirkonium-dotiertes Siliziumdioxid oder Bor-dotiertes Siliziumdioxid enthält und bevorzugt eine Dicke von 10 nm bis 150 nm, besonders bevorzugt von 15 nm bis 50 nm aufweist.

9. Scheibe nach einem der Ansprüche 1 bis 8, wobei die Antireflexionsschicht (6) Siliziumdioxid, bevorzugt Aluminium-dotiertes Siliziumdioxid, Zirkonium-dotiertes Siliziumdioxid oder Bor-dotiertes Siliziumdioxid enthält und bevorzugt eine Dicke von 40 nm bis 100 nm aufweist.

10. Scheibe nach einem der Ansprüche 1 bis 9, wobei oberhalb der Beschichtung (2) eine Abdeckschicht (7) angeordnet ist, die zumindest ein Oxid, bevorzugt zumindest TiOₓ, ZrO₂, HfO₂, Nb₂O₅, Ta₂O₅, Cr₂O₃, WO₃ und / oder CeO₂ enthält und die bevorzugt eine Dicke von 2 nm bis 50 nm, besonders bevorzugt von 5 nm bis 20 nm aufweist.

11. Scheibe nach einem der Ansprüche 1 bis 10, die eine innenraumseitige Emissivität von kleiner oder gleich 25 % aufweist.

12. Scheibe nach einem der Ansprüche 1 bis 11, wobei das Substrat (1) eine Transmission in sichtbaren Spektralbereich von größer oder gleich 70 % oder von kleiner 50 % aufweist.

13. Verfahren zur Herstellung einer Scheibe mit Wärmestrahlung reflektierender Beschichtung (2) nach einem der Ansprüche 1 bis 12, wobei auf ein Substrat (1) nacheinander zumindest
(a) eine Haftschicht (3),
(b) eine funktionelle Schicht (4), die zumindest ein transparentes, elektrisch leitfähiges Oxid (TCO) enthält,
(c) eine dielektrische Barriereschicht (5) und
(d) eine Antireflexionsschicht (6)
aufgebracht werden und
(e) das Substrat (1) auf eine Temperatur von mindestens 200°C erwärmt wird.

14. Verfahren nach Anspruch 13, wobei das Substrat (1) in Verfahrenschritt (e) bei einer Temperatur von 500°C bis 700°C gebogen wird.

15. Verfahren nach Anspruch 13 oder 14, wobei das Substrat (1) nach Verfahrenschritt (e) mit einer Vorspannung oder Teilvorspannung versehen wird.

16. Verfahren nach einem der Ansprüche 13 bis 15, wobei der spezifische Widerstand der funktionellen Schicht (4) vor Verfahrensschritt (e) von 500*10⁻⁶ Ohm*cm bis 3500*10⁻⁶ Ohm*cm, bevorzugt von 1000*10⁻⁶ Ohm*cm bis 2000*10⁻⁶ Ohm*cm beträgt und wobei die Absorption der Beschichtung (2) vor Verfahrensschritt (e) bevorzugt von 10% bis 25% beträgt.

17. Verwendung der Scheibe mit Wärmestrahlung reflektierender Beschichtung nach einen der Ansprüche 1 bis 12 als Windschutzscheibe, Heckscheibe, Seitenscheibe und / oder Dachscheibe.

## Claims

1. Motor vehicle pane, comprising at least one curved substrate (1) and at least one thermal radiation reflecting coating (2) on the interior-side surface of the substrate (1), wherein the coating (2) on the substrate (1) includes at least
- an adhesion layer (3),
- above the adhesion layer (3), a functional layer (4) that contains at least one transparent, electrically conductive oxide (TCO),
- above the functional layer (4), a dielectric barrier layer (5) for regulating oxygen diffusion, and
- above the barrier layer (5), an antireflection layer (6) that contains an oxide with a refractive index less than or equal to 1.8 and a thickness from 20 nm to 150 nm,
and wherein the barrier layer (5) has a thickness from 10 nm to 40 nm.

2. Pane according to claim 1, wherein the barrier layer (5) has a thickness from 10 nm to 30 nm, preferably from 12 nm to 30 nm, particularly preferably from 15 nm to 25 nm.

3. Pane according to claim 1 through [sic] 2, wherein the substrate (1) is bonded via at least one thermoplastic intermediate layer (9) to a cover pane (8) to form a composite pane and wherein the coating (2) is arranged on the surface of the substrate (1) facing away from the cover pane (8).

4. Pane according to claim 3, wherein the composite pane has visible-light transmittance of less than 10%.

5. Pane according to claim 3 or 4, wherein a sun protection coating is arranged on the surface of the substrate (1) facing the cover pane (8) or on the surface of the cover pane (8) facing the substrate (1) or in the thermoplastic intermediate layer (9).

6. Pane according to one of claims 1 through 5, wherein the functional layer (4) contains at least fluorine-doped tin oxide, antimony-doped tin oxide, and / or indium tin oxide and preferably has a thickness from 40 nm to 200 nm, particularly preferably from 90 nm to 150 nm.

7. Pane according to one of claims 1 through 6, wherein the barrier layer (5) contains a material with a refractive index from 1.7 to 2.3, preferably at least one oxide and / or one nitride, particularly preferably silicon nitride, and most particularly preferably aluminum-doped silicon nitride, zirconium-doped silicon nitride, or boron-doped silicon nitride.

8. Pane according to one of claims 1 through 7, wherein the adhesion layer (3) contains at least one oxide, preferably silicon dioxide, particularly preferably aluminum-doped silicon dioxide, zirconium-doped silicon dioxide, or boron-doped silicon dioxide and preferably has a thickness from 10 nm to 150 nm, particularly preferably from 15 nm to 50 nm.

9. Pane according to one of claims 1 through 8, wherein the antireflection layer (6) contains silicon dioxide, preferably aluminum-doped silicon dioxide, zirconium-doped silicon dioxide, or boron-doped silicon dioxide and preferably has a thickness from 40 nm to 100 nm.

10. Pane according to one of claims 1 through 9, wherein a cover layer (7) that contains at least one oxide, preferably at least TiOₓ, ZrO₂, HfO₂, Nb₂O₅, Ta₂O₅, Cr₂O₃, WO₃, and / or CeO₂ is arranged above the coating (2), and that preferably has a thickness from 2 nm to 50 nm, particularly preferably from 5 nm to 20 nm.

11. Pane according to one of claims 1 through 10, that has an interior-side emissivity less than or equal to 25%.

12. Pane according to one of claims 1 through 11, wherein the substrate (1) has transmittance in the visible spectral range greater than or equal to 70% or less than 50%.

13. Method for producing a pane with a thermal radiation reflecting coating (2) according to one of claims 1 through 12, wherein on a substrate (1), at least
(a) an adhesion layer (3),
(b) a functional layer (4) that contains at least one transparent, electrically conductive oxide (TCO),
(c) a dielectric barrier layer (5), and
(d) an antireflection layer (6)
are applied in succession, and
(e) the substrate (1) is heated to a temperature of at least 200°C.

14. Method according to claim 13, wherein the substrate (1) is bent in process step (e) at a temperature from 500°C to 700°C.

15. Method according to claim 13 or 14, wherein the substrate (1) is prestressed or partially prestressed after process step (e).

16. Method according to one of claims 13 through 15, wherein the specific resistance of the functional layer (4) before process step (e) is from 500*10⁻⁶ ohm*cm to 3500*10⁻⁶ ohm*cm, preferably from 1000*10⁻⁶ ohm*cm to 2000*10⁻⁶ ohm*cm, and wherein the absorption of the coating (2) before process step (e) is preferably from 10% to 25%.

17. Use of the pane with thermal radiation reflecting coating according to one of claims 1 through 12 as a windshield, rear window, side window, and / or roof panel.

## Revendications

1. Vitre de véhicule automobile comportant au moins un substrat cintré (1) et au moins un revêtement (2) réfléchissant le rayonnement thermique sur la surface côté habitacle du substrat (1), le revêtement (2) sur le substrat (1) présentant au moins
- une couche d'adhérence (3) ;
- au-dessus de la couche d'adhérence (3), une couche fonctionnelle (4) qui contient au moins un oxyde, conducteur de l'électricité, transparent (TCO) ;
- au-dessus de la couche fonctionnelle (4), une couche barrière diélectrique (5) pour la régulation de la diffusion d'oxygène ; et
- au-dessus de la couche barrière (5), une couche anti-réflexion (6), laquelle contient un oxyde ayant un indice de réfraction inférieur ou égal à 1,8 et présente une épaisseur de 20 nm à 150 nm,
et la couche barrière (5) présentant une épaisseur de 10 nm à 40 nm.

2. Vitre selon la revendication 1, dans laquelle la couche barrière (5) présente une épaisseur de 10 nm à 30 nm, de préférence de 12 nm à 30 nm, de manière particulièrement préférée de 15 nm à 25 nm.

3. Vitre selon l'une des revendications 1 ou 2, dans laquelle le substrat (1) est lié à une vitre de couverture (8) par l'intermédiaire d'au moins une couche intermédiaire thermoplastique (9) pour former une vitre feuilletée et dans laquelle le revêtement (2) est disposé sur la surface du substrat (1) tournée à l'opposé de la vitre de couverture (8).

4. Vitre selon la revendication 3, dans laquelle la vitre feuilletée présente une transmission de lumière visible inférieure à 10 %.

5. Vitre selon l'une des revendications 3 ou 4, dans laquelle un revêtement de protection solaire est disposé sur la surface du substrat (1) orientée vers la vitre de couverture (8) ou sur la surface de la vitre de couverture (8) orientée vers le substrat (1) ou dans la couche intermédiaire thermoplastique (9).

6. Vitre selon l'une des revendications 1 à 5, dans laquelle la couche fonctionnelle (4) contient au moins de l'oxyde d'étain dopé au fluor, de l'oxyde d'étain dopé à l'antimoine et/ou de l'oxyde d'indium et d'étain et présente de préférence une épaisseur de 40 nm à 200 nm, de manière particulièrement préférée de 90 nm à 150 nm.

7. Vitre selon l'une des revendications 1 à 6, dans laquelle la couche barrière (5) contient une matière ayant un indice de réfraction de 1,7 à 2,3, de préférence au moins un oxyde et/ou un nitrure, de manière particulièrement préférée du nitrure de silicium et de manière tout particulièrement préférée du nitrure de silicium dopé à l'aluminium, du nitrure de silicium dopé au zirconium ou du nitrure de silicium dopé au bore.

8. Vitre selon l'une des revendications 1 à 7, dans laquelle la couche d'adhérence (3) contient au moins un oxyde, de préférence du dioxyde de silicium, de manière particulièrement préférée du dioxyde de silicium dopé à l'aluminium, du dioxyde de silicium dopé au zirconium ou du dioxyde de silicium dopé au bore et présente de préférence une épaisseur de 10 nm à 150 nm, de manière particulièrement préférée de 15 nm à 50 nm.

9. Vitre selon l'une des revendications 1 à 8, dans laquelle la couche anti-réflexion (6) contient du dioxyde de silicium, de préférence du dioxyde de silicium dopé à l'aluminium, du dioxyde de silicium dopé au zirconium ou du dioxyde de silicium dopé au bore et présente de préférence une épaisseur de 40 nm à 100 nm.

10. Vitre selon l'une des revendications 1 à 9, dans laquelle, au-dessus du revêtement (2), est disposée une couche de recouvrement (7) qui contient au moins un oxyde, de préférence au moins TiOₓ, ZrO₂, HfO₂, Nb₂O₅, Ta₂O₅, Cr₂O₃, WO₃ et/ou CeO₂ et qui présente de préférence une épaisseur de 2 nm à 50 nm, de manière particulièrement préférée de 5 nm à 20 nm.

11. Vitre selon l'une des revendications 1 à 10, qui présente une émissivité côté habitacle inférieure ou égale à 25 %.

12. Vitre selon l'une des revendications 1 à 11, dans laquelle le substrat (1) présente une transmission dans le domaine spectral visible supérieure ou égale à 70 % ou inférieure à 50 %.

13. Procédé de fabrication d'une vitre ayant un revêtement (2) réfléchissant le rayonnement thermique, selon l'une des revendications 1 à 12, dans lequel, sur un substrat (1) sont appliquées l'une après l'autre au moins
(a) une couche d'adhérence (3) ;
(b) une couche fonctionnelle (4) qui contient au moins un oxyde, conducteur de l'électricité, transparent (TCO) ;
(c) une couche barrière diélectrique (5) ; et
(d) une couche anti-réflexion (6)
(e) et
(f) le substrat (1) est chauffé à une température d'au moins 200 °C.

14. Procédé selon la revendication 13, dans lequel le substrat (1) est cintré à l'étape de procédé (e) à une température de 500 °C à 700 °C.

15. Procédé selon l'une des revendications 13 ou 14, dans lequel le substrat (1) est doté d'une précontrainte ou d'une précontrainte partielle après l'étape de procédé (e).

16. Procédé selon l'une des revendications 13 à 15, dans lequel la résistance spécifique de la couche fonctionnelle (4) avant l'étape de procédé (e) est de 500*10⁻⁶ Ohm*cm à 3500*10⁻⁶ Ohm*cm, de préférence de 1000*10⁻⁶ Ohm*cm à 2000*10⁻⁶ Ohm*cm et dans lequel l'absorption du revêtement (2) avant l'étape de procédé (e) est de préférence de 10 % à 25 %.

17. Utilisation de la vitre ayant un revêtement réfléchissant le rayonnement thermique, selon l'une des revendications 1 à 12, en tant que pare-brise, vitre arrière, vitre latérale et/ou vitre de toit.
